# EUROPEAN PATENT SPECIFICATION

(11) **EP 2 601 717 B1**
(45) Date of publication and mention of the grant of the patent: **21.10.2015**
(21) Application number: 11768202.1
(22) Date of filing: 22.09.2011
(51) Int. Cl.: H02G 3/04

(54) **CONDUIT INNERDUCT HAVING REDUCED FRICTION AND HIGH STRENGTH**
INNENKANAL EINER LEITUNG MIT VERRINGERTER REIBUNG UND HOHER FESTIGKEIT
DOUBLURE DE CONDUIT À FROTTEMENT RÉDUIT ET DE HAUTE RÉSISTANCE

(30) Priority: 29.07.2011 US 201113193915; 23.09.2010 US 403806 P
(43) Date of publication of application: 12.06.2013
(73) Proprietor: Wesco Equity Corporation, Pittsburgh, PA 15219 (US)
(72) Inventor: ALLEN, Jerry L., Centennial, Wyoming 82055 (US)
(74) Representative: Patel, Nikesh
(86) International application number: PCT/US2011/052678
(87) International publication number: WO 2012/040413

(56) References cited:
- WO-A1-2008/027467
- GB-A- 2 432 710
- US-A- 5 843 542
- US-A1- 2008 264 669
- US-B1- 6 262 371

## Description

### CROSS REFERENCE TO RELATED APPLICATION

This application claims priority from U.S. provisional patent application serial number 61/403,806 filed on September 23, 2010.

### TECHNICAL FIELD

This invention relates to the construction of a fabric innerduct which is placed in an underground conduit and which is adapted to receive a cable or other item therein. This invention also relates to the construction of a fabric pull tape used to pull a cable into the conduit. More particularly, this invention relates to such an innerduct or pull tape which is made of a system of fabric that reduces the friction of its insertion into the conduit. Moreover, the system of fabric makes the insertion of a cable into the innerduct easier while increasing the tensile strength of the innerduct.

### BACKGROUND ART

Fabric innerducts, such as shown in U.S. Patent No. 6,262,371 and in U.S. Patent 2008/264669 A1, have been very successful in the communications industry. These innerducts are inserted into a conduit, which may extend for many miles underground, and they provide one or more compartments, or cells, into each of which a cable may be readily inserted. While such represents a significant improvement over their rigid innerduct predecessors, there is room for improvement in reducing the friction created when inserting the innerduct into the conduit and, in particular, when inserting a cable into a compartment of the innerduct.

These fabric innerducts must have the tensile strength to endure being pulled into a conduit, while at the same time provide as little frictional resistance as possible. To date these innerducts have been woven of a fabric material in such a way as to provide a compromise between high strength and low friction. Specifically, the fabric for these innerducts is typically woven with strands in the warp direction which are of a high tensile strength material and strands in the fill direction which are of a low friction material. Thus, some strength is lost, for the sake of low friction, and some friction is accepted for the sake of strength.

Pull tapes made of a fabric material and can be positioned in a compartment of an innerduct and thereafter utilized to pull a cable into the compartment. Like the innerduct, the pull tape must have the tensile strength required to pull the cable into the innerduct. However, prior art materials for such pull tapes have provided such tensile strength to the sacrifice of the ease of movement of the tape.

Thus, the need exists for an innerduct or pull tape which are made of a fabric which provides high tensile strength and at the same time low friction.

### DISCUSSION OF THE INVENTION

It is thus an object of one aspect of the present invention to provide a device to be introduced into a conduit, such as in the form of an innerduct or pull tape, which is made of two fabrics, one having a high tensile strength and the other having a low coefficient of friction.

It is an object of another aspect of the invention to provide a device, as above, whose outer surface is made of a material having a low coefficient of friction and which as an inner portion made of a material having high tensile strength.

These and other objects of the present invention, as well as the advantages thereof over existing prior art forms, which will become apparent from the description to follow, are accomplished by the improvements hereinafter described and claimed.

In general, a device to be inserted into a conduit includes a first material portion of a desired tensile strength and a second material portion having a desired coefficient of friction. The first and second material portions are positioned adjacent to each other.

In accordance with one particular aspect of the present invention, a device according to appended claim 1 is provided.

According to an embodiment, a device to be inserted into a conduit includes a first fabric material having a desired coefficient of friction and a second fabric material attached to the first fabric material and having a desired tensile strength. A third fabric material is attached to the second fabric material and has a desired coefficient of friction.

In accordance with yet another embodiment, a device to be inserted into a conduit includes a plurality of strands of material. Each strand includes an inner core of a material having a desired tensile strength and another sheath of material around the core and having a desired coefficient of friction.

A preferred exemplary device in the form of an innerduct or pull tape according to the concepts of the present invention is shown by way of example in the accompanying drawings without attempting to show all the various forms and modifications in which the invention might be embodied, the invention being measured by the appended claims and not by the details of the specification.

### BRIEF DESCRIPTION OF THE DRAWINGS

Fig. 1 is a somewhat schematic, fragmented, side elevational view of an innerduct made in accordance with the present invention.
Fig. 2 is a sectional view taken substantially along line 2-2 of Fig. 1.
Fig. 3 is an enlarged view of the portion of Fig. 2 encircled and labeled Fig. 3.
Fig. 4 is an enlarged view of the portion of Fig. 2 encircled and labeled Fig. 4.
Fig. 5 is an enlarged partial sectional view taken substantively along line 5-5 of Fig. 2 and also represents a sectional view of a pull tape made in accordance with the present invention.

### PREFERRED EMBODIMENTS FOR CARRYING OUT THE INVENTION

An innerduct to be received in an underground conduct and made in accordance with the present invention is generally indicated by the numeral 10. Innerduct 10 is preferably made of a fabric material and can be of the type described in U.S. Patent No. 6,262,371.

Innerduct 10 is shown as being made up of a plurality of cells, generally indicated by the numerals 11, 12 and 13. However, often times such innerducts may have only one cell or may have any number of a plurality of cells, three cells being shown herein. Cell 11 is made up of a fabric material 14 which is attached at its ends by a stitching 15 to form a compartment 16 for the receipt of a cable or similar item. Cell 12 is made up of a fabric material 17 which can be attached at its ends by the same stitching 15 that attached the ends of material 14 of cell 11. Thus, a compartment 18 is formed in cell 12 to receive a cable or similar item. Similarly, cell 13 is made up of a fabric material 19 which can be attached at its ends by stitching 15 so that cells 11, 12 and 13 are all attached to each other. A compartment 20 is formed in cell 13 to receive a cable or similar item.

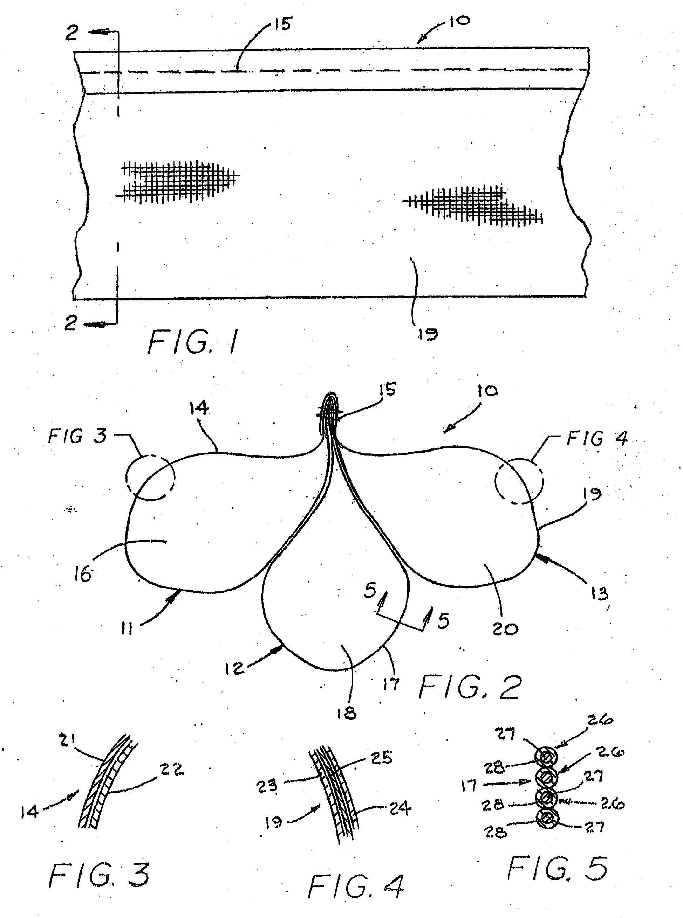

As best seen in Fig. 3, the fabric material 14 of cell 11 is shown as being formed of two plies of fabric material, an outer ply 21 being of a high tensile strength material and an inner ply 22 being of a material having coefficient of a low friction. As used herein, a high tensile strength material is one having a tensile strength from approximately 230 pounds per inch (1.586 MPa) or greater and a material having a low coefficient of friction is one having a coefficient of friction from about 0.10 to about 0.15. As a result, ply 21 gives cell 11 a surface with strength, while ply 22 allows a cable or other item to be easily inserted therein by providing a surface with a desired coefficient of friction. Plies 21 and 22 may be attached to each other by any suitable means such as sewing, heat bading, or by an adhesive. While the other cells of innerduct 10 could all be of the two ply concept of cell 11, for purposes of this description, the other two cells, 12 and 13, are shown as being differently constructed.

For example, as best seen in Fig. 4, the fabric material 19 of cell 13 is shown as being formed of three plies of fabric material. The inner ply 23 and the outer ply 24 are a material made of a low coefficient friction material, while a central ply 25, which is sandwiched between plies 23 and 24, is made of a material having a desired high tensile strength. As a result, ply 25 gives cell 13 strength, ply 23 presents a surface and allows a cable or other item to be easily inserted in cell 13, and ply 24 presents a surface which makes it easier to insert cell 13 into a conduit. Plies 23, 24 and 25 may be attached to each other in the same manner as plies 21 and 22. As previously indicated, although cell 13 is being described as having the three plies 23, 24 and 25, cells 11 and 12 could be likewise constructed.

As best shown in Fig. 5, the fabric material 17 of cell 12 or of a pull tape can be made of strands 26 of material 17 are co-extruded of two different materials and woven to form cell 12 or the pull tape. That is, each strand 26 of material 17 has an inner core 27 made of a material having a desired high tensile strength and an outer sheath 28 made of a material having a desired low coefficient of friction. Thus, the outer surface of both sides of material 17, when woven, provides low friction to accomplish both ease of insertion into a conduit and ease of insertion of a cable or other item into cell 12. At the same time, core 27 provides the necessary strength for cell 12. As previously indicated, although cell 12 is being described as being woven from these unique strands 26, cells 11 and 13 could be likewise so constructed.

## Claims

1. A device adapted to be inserted into a conduit **characterised in that** the device includes a first material portion (21, 25, 27) having a high tensile strength, and a second material portion (22, 23, 28) having a low coefficient of friction, said first and second materials being of different fabric materials and being positioned adjacent to each other.

2. The device of claim 1, said first and second materials being attached to each other.

3. The device of claim 2 wherein said first and second material portions (21, 25, 27, 22, 23, 28) form a strand when attached to each other.

4. The device of claim 3 wherein said second material portion (22, 23, 28) forms the outside of said strand.

5. The device of claim 4 wherein a plurality of said strands are woven together to form an innerduct (10) and adapted to be inserted into a conduit.

6. The device of claim 4 wherein a plurality of said strands are woven together to form a pull tape adapted to be inserted into a conduit.

7. A device of claim 1 comprising a plurality of strands (26) of material, each said strand including an inner core (27) of said first material portion (21, 25, 27) and an outer sheath (28) of said second material portion (22, 23, 28).

8. A device according to claim 7 wherein said strands (26) are woven together to form an innerduct (10) or a pull tape.

9. The device of claim 8 wherein said first material portion (21, 25, 27) defines one surface of the device and said second material portion (22, 23, 28) defines an opposed surface of the device.

10. The device of claim 9 wherein said first and second material portions (21, 25, 27, 22, 23, 28) form an innerduct adapted to be inserted into a conduit.

11. The device of claim 1 further comprising a third material portion (24) having a desired low coefficient of friction, said second material portion (23) being attached to said first material portion (25), and said third material portion being attached to said first material portion (25).

12. The device of claim 11 wherein said third material portion (24) is fabric.

13. The device of claim 12 wherein said second material portion (22, 23, 28) defines one surface of the device and said third material portion (24) defines an opposed surface of the device.

14. The device of claim 13 wherein said first, second and third material portions (21, 25, 27, 22, 23, 28, 26) form an innerduct (10) adapted to be inserted into a conduit.

15. The device of claim 1 wherein the high tensile strength material is one having a tensile strength from approximately 230 pounds per inch (1.586 MPa) or greater and the material having a low coefficient of friction is one having a coefficient of friction from about 0.10 to about 0.15.

## Patentansprüche

1. Vorrichtung, die zum Einführen in eine Leitung ausgeführt ist, **dadurch gekennzeichnet, dass** die Vorrichtung einen Teil aus erstem Material (21, 25, 27) mit einer hohen Zugfestigkeit und einen Teil aus zweitem Material (22, 23, 28) mit einem niedrigen Reibungskoeffizienten beinhaltet, wobei das genannte erste und zweite Material aus verschiedenen textilen Materialien sind und nebeneinander positioniert sind.

2. Vorrichtung nach Anspruch 1, wobei das genannte erste und zweite Material aneinander angebracht sind.

3. Vorrichtung nach Anspruch 2, wobei die genannten Teile aus erstem und zweitem Material (21, 25, 27, 22, 23, 28) einen Strang bilden, wenn sie aneinander angebracht sind.

4. Vorrichtung nach Anspruch 3, wobei der genannte Teil aus zweitem Material (22, 23, 28) die Außenseite des genannten Strangs bildet.

5. Vorrichtung nach Anspruch 4, wobei mehrere der genannten Stränge miteinander verwebt sind, um einen Innenkanal (10) zu bilden, und ausgeführt sind, um in eine Leitung eingeführt zu werden.

6. Vorrichtung nach Anspruch 4, wobei mehrere der genannten Stränge miteinander verwebt sind, um ein Zugband zu bilden, das zum Einführen in eine Leitung ausgeführt ist.

7. Vorrichtung nach Anspruch 1, die mehrere Stränge (26) aus Material aufweist, wobei jeder genannte Strang einen inneren Kern (27) aus dem genannten Teil aus erstem Material (21, 25, 27) und eine äußere Umhüllung (28) aus dem genannten Teil aus zweitem Material (22, 23, 28) beinhaltet.

8. Vorrichtung nach Anspruch 7, wobei die genannten Stränge (26) miteinander verwoben sind, um einen Innenkanal (10) oder ein Zugband zu bilden.

9. Vorrichtung nach Anspruch 8, wobei der genannte Teil aus erstem Material (21, 25, 27) eine Oberfläche der Vorrichtung definiert und der genannte Teil aus zweitem Material (22, 23, 28) eine entgegengesetzte Oberfläche der Vorrichtung definiert.

10. Vorrichtung nach Anspruch 9, wobei die genannten Teile aus erstem und zweitem Material (21, 25, 27, 22, 23, 28) einen Innenkanal bilden, der zum Einführen in eine Leitung ausgeführt ist.

11. Vorrichtung nach Anspruch 1, die ferner einen Teil aus drittem Material (24) aufweisen, das einen erwünschten niedrigen Reibungskoeffizienten hat, wobei der genannte Teil aus zweitem Material (23) an dem genannten Teil aus erstem Material (25) angebracht ist und der genannte Teil aus drittem Material an dem genannten Teil aus erstem Material (25) angebracht ist.

12. Vorrichtung nach Anspruch 11, wobei der genannte Teil aus drittem Material (24) eine Textilie ist.

13. Vorrichtung nach Anspruch 12, wobei der genannte Teil aus zweitem Material (22, 23, 28) eine Oberfläche der Vorrichtung definiert und der genannte Teil aus drittem Material (24) eine entgegengesetzte Oberfläche der Vorrichtung definiert.

14. Vorrichtung nach Anspruch 13, wobei die genannten Teile aus erstem, zweitem und drittem Material (21, 25, 27, 22, 23, 28, 26) einen Innenkanal (10) bilden, der zum Einführen in eine Leitung ausgeführt ist.

15. Vorrichtung nach Anspruch 1, wobei das hoch zugfeste Material eines mit einer Zugfestigkeit von etwa 230 Pfund pro Zoll (1,586 MPa) oder mehr ist und das Material mit einem niedrigen Reibungskoeffizienten eines mit einem Reibungskoeffizienten von etwa 0,10 bis etwa 0,15 ist.

## Revendications

1. Dispositif conçu pour être inséré dans un conduit, **caractérisé en ce que** le dispositif inclut une portion de première matière (21, 25, 27) avec une résistance élevée à la traction, et une portion de deuxième matière (22, 23, 28) ayant un faible coefficient de frottement, lesdites première et deuxième matières étant des matières différentes en tissu et étant positionnées de façon adjacente l'un à l'autre.

2. Dispositif selon la revendication 1, lesdites première et deuxième matières étant attachées l'une à l'autre.

3. Dispositif selon la revendication 2, lesdites portions de première et deuxième matières (21, 25, 27, 22, 23, 28) formant un cordon lorsqu'elles sont attachées l'une à l'autre.

4. Dispositif selon la revendication 3, ladite portion de deuxième matière (22, 23, 28) formant la face externe dudit cordon.

5. Dispositif selon la revendication 4, une pluralité desdits cordons étant tissés ensemble afin de former une doublure (10) et conçus pour être insérés dans un conduit.

6. Dispositif selon la revendication 4, une pluralité desdits cordons étant tissés ensemble afin de former une bande de traction conçue pour être insérée dans un conduit.

7. Dispositif selon la revendication 1, comprenant une pluralité de cordons (26) de matière, alors que chacun desdits cordons inclut une âme interne (27) faite de ladite portion de première matière (21, 25, 27), et une gaine externe (28) faite de ladite portion de deuxième matière (22, 23, 28).

8. Dispositif selon la revendication 7, lesdits cordons (26) étant tissés ensemble afin de former une doublure (10) ou une bande de traction.

9. Dispositif selon la revendication 8, ladite portion de première matière (21, 25, 27) définissant une surface du dispositif et ladite portion de deuxième matière (22, 23, 28) définissant une surface opposée du dispositif.

10. Dispositif selon la revendication 9, lesdites portions de première et deuxième matières (21, 25, 27, 22, 23, 28) formant une doublure conçue pour être insérée dans un conduit.

11. Dispositif selon la revendication 1, comprenant en outre une portion de troisième matière (24) avec un faible coefficient de frottement désiré, ladite portion de deuxième matière (23) étant attachée à ladite portion de première matière (25), et ladite portion de troisième matière étant attachée à ladite portion de première matière (25) .

12. Dispositif selon la revendication 11, ladite portion de troisième matière (24) étant du tissu.

13. Dispositif selon la revendication 12, ladite portion de deuxième matière (22, 23, 28) définissant une surface du dispositif et ladite portion de troisième matière (24) définissant une surface opposée du dispositif.

14. Dispositif selon la revendication 13, lesdites portions de première, deuxième et troisième matières (21, 25, 27, 22, 23, 28, 26) formant une doublure (10) conçue pour être insérée dans un conduit.

15. Dispositif selon la revendication 1, la matière à résistance élevée à la traction étant une matière possédant une résistance à la traction d'environ 230 livres par pouce (1,586 MPa) ou supérieure, et la matière à faible coefficient de frottement étant une matière possédant un coefficient de frottement allant d'environ 0,10 à environ 0,15.
